# EUROPÄISCHE PATENTSCHRIFT

(11) **EP 2 282 612 B1**
(45) Veröffentlichungstag und Bekanntmachung des Hinweises auf die Patenterteilung: **10.07.2019**
(21) Anmeldenummer: 10182586.7
(22) Anmeldetag: 09.05.2006
(51) Int. Cl.: H05B 37/02, H04L 29/12

(54) **Ermittlung der Busadresse eines Teilnehmers in einem Beleuchtungs-Bussystem**
Determination of the bus address of a user in a lighting bus system
Etablissement de l'adresse de bus d'un utilisateur dans un système de bus d'éclairage

(30) Priorität: 17.06.2005 DE 102005028206
(43) Veröffentlichungstag der Anmeldung: 09.02.2011
(62) Teilanmeldung aus: 06742846.6
(73) Patentinhaber: Tridonic GmbH & Co KG, 6851 Dornbirn (AT)
(72) Erfinder: Wallhead, Geoff, Newton Aycliffe, Durham DL5 5 HL (GB); Kears, John, Witton Gilbert, Durham DH7 6RS (GB)
(74) Vertreter: Rupp, Christian

(56) Entgegenhaltungen:
- EP-A- 1 480 495
- WO-A-03/094579
- WO-A2-02/13490
- WO-A2-02/25842
- US-A- 5 051 861
- US-A- 5 652 504
- US-A1- 2002 175 641

## Beschreibung

Die vorliegende Erfindung bezieht sich ganz allgemein auf die Ermittlung der Busadresse, die einem Teilnehmer eines Beleuchtungs-Bussystems herstellerseitig oder auch nachträglich über einen Bus zugewiesen wurde.

Im Bereich der Beleuchtungs- und Haustechnik sind in den letzten Jahren immer mehr Systeme entwickelt worden, bei denen verschiedenartige Leuchtmittel-Betriebsgeräte (aber auch andere Aktuatoren oder Sensoren) über ein Bussystem miteinander verbunden werden können. Ein Beispiel für ein derartiges standardisiertes Bussystem ist der Industriestandard DALI.

Bei der Installation oder Änderung eines derartigen Bussystems muß einem neu hinzukommenden Teilnehmer (Betriebsgeräte, Aktuatoren, Sensoren wie bspw. Tageslichtsensoren und Bewegungsmeldern) üblicherweise eine Betriebsadresse zugewiesen werden. Diese Betriebsadresse kann sich von einer ggf. herstellerseitig vorgesehenen Adresse in dem Gerät unterscheiden.

Es ist bekannt, dass sich beispielsweise in der Art eines Zufallsprinzips die Busteilnehmer die Adressen innerhalb eines definierten Adressvorrats ausgelöst durch einen entsprechenden Befehl von einer Buszentrale selbst zuweisen. Da die Busadressvergabe an die Busteilnehmer nicht der zentrale Punkt der vorliegenden Erfindung ist, wird auf die einschlägig bekannten Verfahren verwiesen. Auf jeden Fall wird jedem Busteilnehmer nach Abschluß des Adressvergabeverfahrens eine Betriebsadresse zugeteilt sein bzw. hat sich jeder Busteilnehmer selbst eine Adresse aus dem definierten Adressvorrat zugewiesen. Um nunmehr im folgenden eigentlichen Betrieb der mittels des Bussystems gesteuerten Beleuchtungsanlage zielgerecht vorgehen zu können, muß in Erfahrung gebracht werden, wie die Betriebsadresse eines jeden angeschlossenen Busteilnehmers lautet.

Aus dem Stand der Technik sind diesbezüglich bereits verschiedenartige Verfahren bekannt.

Gemäß der EP 639 938 A1 wird zur Adressvergabe die Lampe aus einer Leuchte herausgenommen, so dass die im folgenden Schritt von einer Zentrale vorgenommene Adressvergabe an dieses manipulierte Gerät erfolgt.

Die Patentanmeldung WO 02/13490 A2 offenbart ein Verfahren zur Ermittlung des Adressbusses einer Beleuchtungsvorrichtung.

Aus der WO 01/33914 A1 ist es bekannt, dass der Lichtpegel einer angeschlossenen Lampe moduliert wird, um zu zeigen, dass gerade eine Adressvergabe an dieses Betriebsgerät erfolgte.

Natürlich ist es auch möglich, eine herstellerseitig vorgegebene Adresse zu verwenden und diese nach außen hin beispielsweise mittels Aufkleber oder dergleichen kund zu tun, wie es aus der EP 1 480 495 A2 und der EP 1 513 376 A1 bekannt sind. Derartige herstellerseitig vorgegebene Adressen sind aber für weitergehende Busanforderungen zu unflexibel.

Auf jeden Fall nimmt das in Erfahrung bringen der zugewiesenen Adressen beim Aufbau bzw. bei der Änderung eines installierten Bussystems sehr viel Zeit in Anspruch, da ein Bediener sich physikalisch zu jedem angeschlossenen Busteilnehmer begeben muß, um dann an Ort und Stelle üblicherweise visuell die Adressvergabe zu kontrollieren. Dieser Installationsschritt ist natürlich dann besonders mühevoll, wenn die Busteilnehmer in einem Gebäude oder ggf. über mehrere Gebäude hinaus weit verteilt sind. Dies ist gerade bei sogenannten Notlichtgeräten der Fall, die also beim Ausfall einer Netzspannungsversorgung batteriegespeist eine definierte Notbeleuchtung gewährleisten sollen und die üblicherweise besonders weit voneinander beabstandet über Gebäude verteilt sind. Wenn sich also insbesondere bei Notlichtgeräten der Installateur über weite Bereiche des Installationsgebietes bewegen muß, sollte dann zumindest das in Erfahrung bringen der vergebenen Adressen möglichst zügig vonstatten gehen.

Die Erfindung setzt an diesem Punkt an und schlägt eine Technik vor, wie in besonders vorteilhafter Weise Busadressen von Busteilnehmern in Erfahrung gebracht werden können.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Auch wenn im folgenden die Erfindung Bezug nehmend auf Leuchtmittel-Betriebsgeräte mit einer Datenbus-Schnittstelle beschrieben werden wird, so ist zu verstehen, dass die Erfindung gleichermaßen Busteilnehmer eines Beleuchtungs-Bussystems wie beispielsweise Sensoren (Tageslichterfassung, Bewegungsmelder etc.) oder Aktuatoren (elektrische Jalousien etc.) betrifft, denen eine Adresse zugewiesen werden kann.

Gemäß einem ersten Aspekt der vorliegenden Erfindung wird ein Verfahren zur Ermittlung der Busadresse eines Busteilnehmers eines Beleuchtungsbussystems, insbesondere eines Leuchtmittel-Betriebsgeräts mit einer Datenbusschnittstelle vorgeschlagen. Der Busteilnehmer weist dabei optische und/oder akustische Signalgeber auf, die die Busadresse in kodierter Form wiedergeben können. Im Falle eines Betriebsgeräts sind diese optischen und/oder akustischen Signalgeber zusätzlich zu den zu betreibenden Leuchtmitteln hinaus vorgesehen.

Die Signalgeber können insbesondere Leuchtdioden sein.

Für eine Kodierung ist es besonders vorteilhaft, wenn die Leuchtdioden unterschiedliche Farben aufweisen, so dass die wiederzugebende Busadresse mittels der unterschiedlichen Farben kodiert werden kann.

Es können insbesondere mehrere optische und/oder visuelle Signalgeber verwendet werden, um die Busadresse in einem definierten Zahlensystem, wie beispielsweise dem Binär- oder Dezimal-Zahlensystem kodiert wiederzugeben.

Das Wiedergeben der Busadresse über die optischen und/oder akustischen Signalgeber kann insbesondere auf einen eingehenden Befehl von einem angeschlossenen Datenbus hin erfolgen.

Die Vergabe der Busadresse kann in an sich bekannter Weise ausgehend von einer Zentrale über den Datenbus und die Busschnittstelle des Busteilnehmers (Betriebsgeräts) erfolgen.

Ein weiterer Aspekt der vorliegenden Erfindung bezieht sich auf ein Verfahren zur Ermittlung der Busadresse wenigstens eines an einen Datenbus angeschlossenen Teilnehmers in einem Beleuchtungs-Bussystem, insbesondere eines Leuchtmittel-Betriebsgeräts. Dabei wird über den Datenbus zuerst eine Betriebsadresse vergeben bzw. zugeteilt. Danach erfolgt ein Identifizierungsbefehl von einer Zentrale über den Datenbus an den Teilnehmer. Als Antwort auf diesen Identifizierungsbefehl gibt der Teilnehmer mittels optischer und/oder akustischer Signalgeber in kodierter Weise die Busadresse wieder. Im Falle eines Betriebsgeräts für Leuchtmittel sind die akustischen und/oder optischen Signalgeber zusätzlich zu den zu betreibenden Leuchtmitteln am Betriebsgerät vorgesehen.

Die Adressvergabe und/oder die Adresswiedergabe kann von einem Benutzer ausgehend von einem Terminal gemäß dem TCP/IP-Standard durchgeführt werden. Das Terminal gibt also in diesem Fall Signale gemäß dem TCP/IP-Standard aus, die ebenfalls auf einen definierten Busstandard, wie beispielsweise dem DALI-Industriestandard eingesetzt werden können, bevor sie an die angeschlossenen Busteilnehmer übermittelt werden.

Im übrigen können die optischen und/oder akustischen Signalgeber über die Busadresswiedergabe hinaus weitere Funktionen übernehmen. Beispielsweise können sie Zustände des Betriebsgeräts, der angeschlossenen Leuchtmittel und/oder anliegender Versorgungsspannungen wiedergeben.

Die Erfindung bezieht sich auch auf eine elektronische Steuereinheit wie beispielsweise einen Mikroprozessor oder ein ASIC für einen Busteilnehmer, die zur Unterstützung eines derartigen Verfahrens ausgelegt ist.

Die Erfindung bezieht sich auch auf ein Busteilnehmergerät, insbesondere ein Betriebsgerät für Leuchtmittel wie beispielsweise elektronische Vorschaltgeräte für Gasentladungslampen, das zur Unterstützung eines derartigen Verfahrens ausgelegt ist.

Das Betriebsgerät kann insbesondere ein Notlicht-Betriebsgerät für ein Leuchtmittel sein.

Ganz allgemein bezieht sich die Erfindung auch auf die Verwendung von insbesondere mehrfarbigen Leuchtdioden eines Busteilnehmers, die auch die Funktion einer Statusanzeige haben, zur kodierten Wiedergabe einer Busadresse des Busteilnehmers.

Weitere Merkmale, Vorteile, Eigenschaften sollen nunmehr anhand eines Ausführungsbeispiels und Bezug nehmend auf die beigefügten Figuren der Zeichnungen erläutert werden.
Fig. 1 zeigt dabei ein erfindungsgemäßes Beleuchtungssystem aufweisend ein HF-Vorschaltgerät sowie ein batteriegespeistes Notlichtmodul, und
Fig. 2 zeigt ein kombiniertes TCP-IP- und DALI-Netzwerk, dass zur Adressvergabe und Ermittlung der Busadressen gemäß der vorliegenden Erfindung verwendet werden kann.

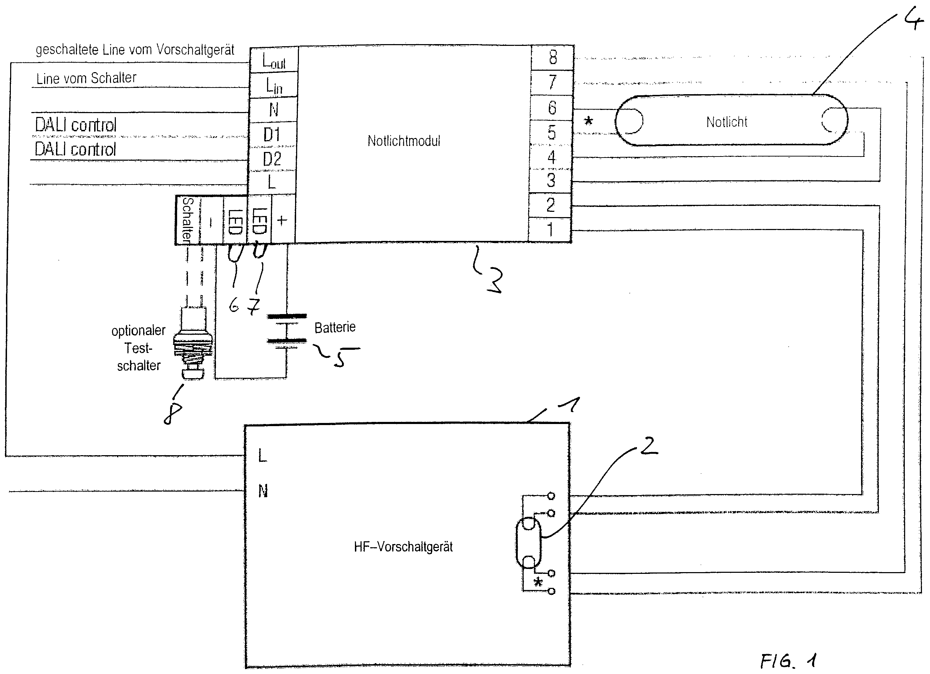

In Fig. 1 ist ein elektronisches Vorschaltgerät 1 gezeigt, das als angeschlossenes Leuchtmittel eine Gasentladungslampe 2 ansteuert und betreibt. Wie gesagt, dieses elektronische Vorschaltgerät 1 stellt nur ein Beispiel für ein Betriebsgerät für Leuchtmittel dar. In bekannter Weise ist das Vorschaltgerät 1 mit einer Netzversorgungsspannung (L, N) verbunden.

Wenn die Netzspannungsversorgung L, N ausfällt, muß ein Notlichtmodul 3 die Steuerung des Betriebs entweder desselben Leuchtmittels 2 oder eines extra dafür vorgesehenen Notlichtmittels 4 übernehmen.

Das Notlichtmodul 3 ist auch mit der Netzspannung L, N versorgt. Indessen dient diese Netzspannungsversorgung zum Laden einer autonomen Spannungsversorgung, im dargestellten Beispiel einer Batterie 5, die beim Ausfall der Netzspannungsversorgung und dem eigentlichen Aktivwerden des Notlichtmoduls 3 die Spannungsversorgung automatisch übernimmt. Weiterhin wird über diese Anschlüsse L,N des Notlichtmoduls auch ein Ausfall der Netzversorgung erfasst, der ein schnelles Umschalten auf den Notlichtbetrieb nötig macht.

Das Notlichtmodul 3 ist busfähig, indem es eine Schnittstelle für einen digitalen Datenbus D1, D2 aufweist, an den beispielsweise ein aus dem Stand der Technik an sich gut bekannter Datenbus gemäß dem DALI-Standard angeschlossen werden kann. Es kann ein Eindrahtbus oder auch ein Mehrdrahtbus vorgesehen sein. Der DALI-Standard stellt natürlich nur ein Beispiel für das verwendete Protokoll dar.

Das Notlichtmodul 3 weist optische und/oder akustische Signalgeber auf. Bevorzugt werden optische Signalgeber 6, 7 verwendet, die auch zur Wiedergabe anderer Zustände des Notlichtmoduls 3, des angeschlossenen Leuchtmittels 4 und/oder der Spannungsversorgung LN in dem Notlichtmodul 3 vorgesehen sind. Es können aber auch Signalgeber vorgesehen werden, die allein dem Zweck der Adresswiedergabe dienen.

Insbesondere kommen als optische Signalgeber wie dargestellt, verschiedenfarbige optische Signalgeber insbesondere verschiedenfarbige LEDs 6, 7 infrage.

Bei akustischen uns optischen Signalgebern kann im übrigen auch eine Codierung über die Zeitdauer des Signals, also im Sinne einer Morse-Codierung erfolgen.

An dem Notlichtmodul 3 kann weiterhin ein optionaler Testschalter 8 vorgesehen sein, bei dessen Betätigung das Notlichtmodul 3 definierte Funktionen ausführt und insbesondere auf dessen Betätigung hin das Notlichtmodul 3 eine optische und/oder akustische Wiedergabe einer ihm zugeteilten bzw. sich selbst zugewiesenen Betriebsadresse ausführt.

Im vorliegenden soll nunmehr davon ausgegangen sein, dass das Notlichtmodul 3 (das wie gesagt nur ein Beispiel für einen digitalbusfähigen Busteilnehmer darstellt) bereits eine Busadresse aufweist. Dies Busadresse kann grundsätzlich bereits herstellerseitig implementiert worden sein. Die Erfindung bezieht sich aber insbesondere auf Szenarien, bei denen die Busadressvergabe ausgehend von einer Zentrale über den angeschlossenen DALI-Bus erfolgt.

Auf einen manuellen oder einen digitalen Befehl hin wird das Notlichtmodul 3 veranlasst, die in ihm vorliegende Busadresse optisch und/oder akustisch einem in der Nähe befindlichen Benutzer mitzuteilen. Manuell kann wie gesagt dieser Vorgang beispielsweise über den Testschalter 8 auch direkt am Notlichtmodul 3 ausgelöst werden. Besonders vorteilhaft ist es aber auch, wenn eines oder ggf. auch alle angeschlossenen Busteilnehmer von der Buszentrale angewiesen werden, ihre Busadressen akustisch und/oder optisch wiederzugeben. Wenn sämtliche Teilnehmer angewiesen werden, ihre Busadresse wiederzugeben, wird oft von 'Broadcast'-Befehl gesprochen.

Im folgenden soll als Beispiel die Wiedergabe der Adresse in optischer Weise unter Verwendung verschiedenfarbiger LEDs 6, 7 geschildert werden. Die anstehende Wiedergabe der Adresse kann durch ein eigenständiges optisches Signal angekündigt werden.

Danach kann die vorliegende Adresse in ein Zahlensystem kodiert durch die verschiedenfarbigen LEDs 6, 7 wiedergegeben werden. Jede Farbe kann dabei die Stellung einer Stelle des Zahlensystems, beispielsweise des Binärsystems oder des Dezimalzahlensystems wiederspiegeln (die Farbcodierung kann ggf. mit anderen Codierungen wie bspw. der Zeitdauer des "Blinkens" im Sinne eines Morsens kombiniert werden.

Beispielsweise kann das zweifache Blinken einer roten Diode als Wert '2' interpretiert werden, während das einmalige Blinken einer 'grünen' Diode als den Wert '10' für den Fall des Beispiels des Dezimalzahlensystems interpretiert wird. Der Benutzer muß also lediglich von Hand oder auch ggf. unter Benutzung eines entsprechenden Erfassungswerkzeugs (manueller Zähler oder optischer Sensor zur automatischen Decodierung der Busadresse) die Anzahl des Blinkens des entsprechenden optischen Leuchtmittels notieren und dann mit dem Wert der entsprechenden Stelle des Zahlensystems gewichten.

Da üblicherweise Betriebsadressen in digitalen Bussystemen binär kodiert sind, ist natürlich auch eine binär kodierte Wiedergabe der Betriebsadresse dann von großem Vorteil.

Es kann sein, dass die eigentlichen Leuchtmittel (bspw. Leuchtstofflampe(n)) automatisch während der Adressierungsphase von ihrem zugeordneten Betriebsgerät (bspw. elektronisches Vorschaltgerät) abgeschaltet oder wenigstens gedimmt werden, um während der Adressierungsphase nicht mit den Dioden zu interferieren, die zur Zustandswiedergabe, bspw. zu ihrer Adresswiedergabe dienen. Somit kann das optische Diodensignal also besser erfasst werden.

Darüber hinaus werden die eigentlichen Leuchtmittel durch diese Massnahme geschont, was besonders bei Notbeleuchtungen von Vorteil ist, bei denen der Lampenbetrieb nicht lampenschonend geregelt ist.

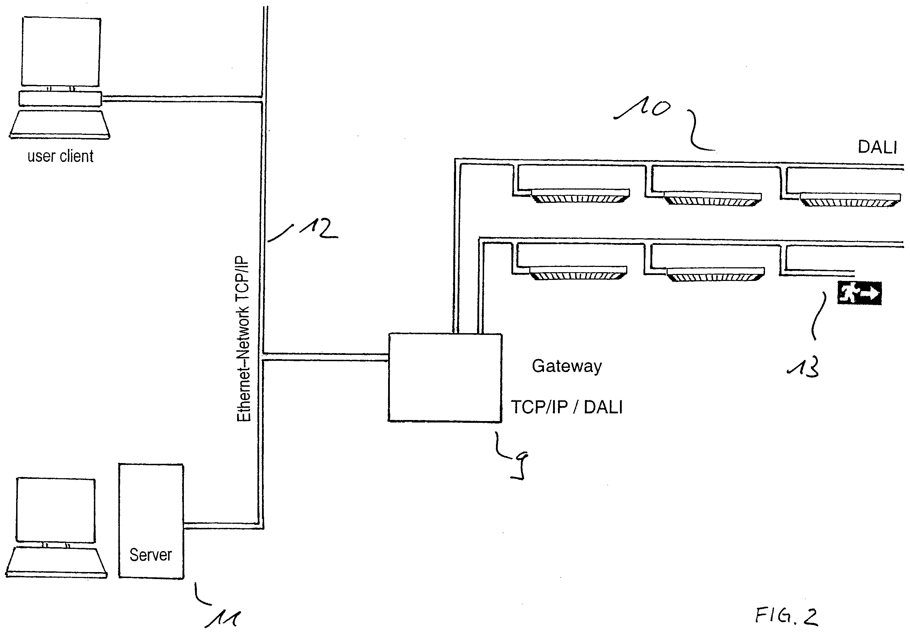

In Fig. 2 ist schematisch dargestellt, dass der Benutzer zur entsprechenden Programmierung des allgemein mit 10 bezeichneten Beleuchtungs-Bussystems (beispielsweise ein DALI-Bussystem) ein Terminal 11 bereitgestellt werden kann, dass mit einem Netzwerk gemäß dem TCP/IP Internet Protocol)-Standard 12 kommuniziert. Ein Umsetzer 9 dient dazu, die über das TCP/IP-Netzwerk 12 eingehenden Befehle beispielsweise auf den DALI-Standard umzusetzen, um dann die unterschiedlichen Busteilnehmer des Beleuchtungs-Bussystems 10 anzusteuern, um sie beispielsweise zur Wiedergabe der ihr zugewiesenen Busadresse zu veranlassen.

Mit 13 ist als ein Teilnehmer des Beleuchtungs-Bussystems 10 eine Notbeleuchtung bezeichnet.

## Patentansprüche

1. Verfahren zur Ermittlung der Busadresse eines Busteilnehmers in einem Beleuchtungs-Bussystem (10), wobei der Busteilnehmer einem Leuchtmittel-Betriebsgerät mit einer Datenbus-Schnittstelle entspricht,
mit dem Schritt der Wiedergabe der Busadresse in codierter Form mit Hilfe von Leuchtdioden (6,7) unterschiedlicher Farben durch das Betriebsgerät.

2. Verfahren nach Anspruch 1, wobei die Busadresse in einem definierten Zahlensystem codiert wiedergegeben wird.

3. Verfahren nach Anspruch 2, bei dem die Busadresse gemäss dem Binär- oder Dezimal-Zahlensystem codiert ist.

4. Verfahren nach einem der vorhergehenden Ansprüche, bei dem das Betriebsgerät die Busadresse ausgelöst durch einen über einen angeschlossenen Datenbus eingehenden Befehl wiedergibt.

5. Verfahren nach einem der vorhergehenden Ansprüche, bei dem die Vergabe der Busadresse ausgehend von einer Zentrale über einen Datenbus und die Busschnittstelle des Betriebsgeräts erfolgt.

6. Busteilnehmer (13), der zur Durchführung eines Verfahrens nach einem der Ansprüche 1 bis 4 eingerichtet ist, wobei der Busteilnehmer (13) Leuchtdioden (6,7) unterschiedlicher Farben aufweist, und wobei der Busteilnehmer (13) ferner dazu eingerichtet ist, die Busadresse in codierter Form mit Hilfe der Leuchtdioden (6,7) unterschiedlicher Farben wiederzugeben.

7. Busteilnehmer (13) nach Anspruch 6,
der ein Betriebsgerät (3) für Leuchtmittel ist.

8. Busteilnehmer nach Anspruch 7,.
**dadurch gekennzeichnet,**
**dass** es ein Notlicht-Betriebsgerät ist.

9. Leuchtmittel-Betriebsgerät (3) nach Anspruch 7, welches dazu eingerichtet ist, über die Leuchtdioden (6, 7) zusätzlich Zustände des Betriebsgeräts, der angeschlossenen Leuchtmittel und/oder anliegender Versorgungsspannungen wiederzugeben.

10. Leuchtmittel-Betriebsgerät nach Anspruch 7, bei dem das Betriebsgerät, über die Leuchtdioden (6,7) hinaus, zu betreibenden Leuchtmittel (4) hinaus aufweist.

11. Leuchtmittel-Betriebsgerät nach einem der Ansprüche 9 oder 10, mit einer Datenbus-Schnittstelle, bei dem das Betriebsgerät über die zu betreibenden Leuchtmittel (4) hinaus weitere akustische Signalgeber aufweist, die dazu ausgelegt sind, die Busadresse in codierter Form wiederzugeben.

## Claims

1. A method for determining the bus address of a bus sharing unit in an illumination bus system (10), wherein the bus sharing unit corresponds to a lighting means operating device with a data bus interface,
with the step of reproducing the bus address in coded form with the aid of light-emitting diodes (6, 7) of different colors by the operating device.

2. A method according to Claim 1, wherein the bus address is reproduced encoded in a defined number system.

3. A method according to Claim 2, in which the bus address is encoded according to a binary or decimal number system.

4. A method according to any one of the preceding claims, in which the operating device reproduces the bus address triggered by a command incoming via a connected data bus.

5. A method according to any one of the preceding claims, in which the allocation of the bus address is carried out coming from a control center via a data bus and the bus interface of the operating device.

6. A bus sharing unit (13), which is configured for implementing a method according to any one of Claims 1 to 4, wherein the bus sharing unit (13) has light-emitting diodes (6, 7) of different colors, and wherein the bus sharing unit (13) is furthermore configured in order to reproduce the bus address in coded form with aid of the light-emitting diodes (6, 7) of different colors.

7. A bus sharing unit (13) according to Claim 6, which is an operating device (3) for the light means.

8. A bus sharing unit according to Claim 7,
**characterized in**
**that** it is an emergency lighting operating device.

9. A lighting means operating device (3) according to Claim 7, which is configured additionally to reproduce conditions of the operating device, the connected lighting means and/or and applied supply voltages via the light-emitting diodes (6, 7).

10. A lighting means operating device according to Claim 7, in which the operating device, beyond the light-emitting diodes (6, 7), also has lighting means (4) to be operated.

11. A lighting means operating device according to any one of Claims 9 or 10, with a data bus interface, in which the operating device, beyond the lighting means (4) to be operated, has further acoustic signal generators, which are designed to reproduce bus addresses in coded form.

## Revendications

1. Procédé de détermination de l'adresse de bus d'un participant au bus dans un système de bus d'éclairage (10), le participant au bus correspondant à un appareil de commande de moyen d'éclairage avec une interface de bus de données,
avec l'étape de reproduction de l'adresse de bus sous forme codée à l'aide de diodes électroluminescentes (6, 7) de différentes couleurs par l'appareil de commande.

2. Procédé selon la revendication 1, l'adresse de bus étant reproduite de manière codée dans un système numérique défini.

3. Procédé selon la revendication 2, dans lequel l'adresse de bus est codé selon le système numérique binaire ou décimal.

4. Procédé selon l'une des revendications précédentes, dans lequel l'appareil de commande reproduit l'adresse de bus de manière déclenchée par une instruction provenant d'un bus de données connecté.

5. Procédé selon l'une des revendications précédentes dans lequel l'attribution de l'adresse a lieu en sortant d'une centrale par l'intermédiaire d'un bus de données et de l'interface de bus de l'appareil de commande.

6. Participant au bus (13), qui est conçu pour l'exécution d'un procédé selon l'une des revendications 1 à 4,
le participant au bus (13) comprenant des diodes électroluminescentes (6, 7) de différentes couleurs et le participant au bus (13) étant en outre conçu pour reproduire l'adresse de bus sous forme codée à l'aide des diodes électroluminescentes (6, 7) de différentes couleurs.

7. Participant au bus (13) selon la revendication 6,
qui est un appareil de commande (3) pour des moyens d'éclairage.

8. Participant au bus (13) selon la revendication 7,
**caractérisé en ce que**
il s'agit d'un appareil de commande d'éclairage de secours.

9. Appareil de commande de moyen d'éclairage (3) selon la revendication 7,
qui est conçu pour reproduire, en outre, par l'intermédiaire des diodes électroluminescentes (6, 7), des états de l'appareil de commande, des moyens d'éclairage raccordés et/ou des tensions d'alimentation appliquées.

10. Appareil de commande de moyen d'éclairage selon la revendication 7, dans lequel l'appareil de commande comprend, en plus des diodes électroluminescentes (6, 7), des moyens d'éclairage (4) à commander.

11. Appareil de commande de moyen d'éclairage selon l'une des revendications 9 ou 10, avec une interface de bus de données, dans lequel l'appareil de commande comprend, en plus des moyens d'éclairage à commander (4), d'autres générateurs de signaux acoustiques, qui sont conçus pour reproduire l'adresse de bus sous forme codée.
